# EUROPEAN PATENT APPLICATION

(11) **EP 2 015 221 A2**
(43) Date of publication of application: **14.01.2009**
(21) Application number: 08010111.6
(22) Date of filing: 03.06.2008
(51) Int. Cl.: G06K 1/12

(54) **Barcode generation system, computer readable recordng medium, and printing device**

(30) Priority: 07.06.2007 JP 2007151371; 12.07.2007 JP 2007183745; 12.09.2007 JP 2007236785
(71) Applicant: Canon Finetech Inc., Misato-shi Saitama 341-8527 (JP)
(72) Inventor: Saijo, Shinichi, Misato-shi Saitama 341-8527 (JP); Ota, Noritaka, Misato-shi Saitama 341-8527 (JP); Niida, Hirohisa, Misato-shi Saitama 341-8527 (JP); kunimatsu, Miho, Misato-shi Saitama 341-8527 (JP); Maruo, Hiroyuki, Misato-shi Saitama 341-8527 (JP)
(74) Representative: Strehl Schübel-Hopf & Partner

(57) **Abstract**

A barcode generation system that generates an appropriate barcode, which satisfies the usage condition of each user, quickly and with a minimum consumption of ink and paper. A test chart is printed on a printing device 200 based on a test chart image 706 provided for printing black bars and white bars of a barcode wherein each of the black bars and white bars has the width of one of a plurality of different numbers of dots, and the output test chart 704 is read by an image scanner 110. An information processing device 100 analyzes the image, which has been read, and generates a relation table 800. In addition, based on information on a barcode type and a narrow bar width, the information processing device 100 calculates, by referring to the relation table 800, the correction values (barcode correction values 707) for the widths of the bar elements constituting the barcode.

## Description

### DETAILED DESCRIPTION

### Field of the Invention

The present invention relates to an inkjet printing device, which records an image using a recording head according to the inkjet recording method, and to a barcode generation system and a computer readable recording medium that generate data used for printing barcodes in the printing device.

### Related Art

In general, in a barcode generation system that uses an inkjet recording head, an ink droplet blurs on a sheet of paper, showing a tendency that the black bar of a barcode becomes wide and the white bar (actually a space) becomes narrow. This barcode widening/narrowing greatly affects the barcode reading accuracy sometimes with a problem that the barcode cannot be read.

To solve this problem, there are proposed a barcode correction method that makes a white bar wider in advance anticipating that the dot will blur and a technique that makes it hard for a black bar part to blur (see Patent Document 1).

Another problem is that, because the degree of the ink blur depends largely on the type of a paper material, a barcode that can be read on some type of paper (paper type) cannot be read on another type of paper.

To solve this problem, a technique is proposed that covers the difference among paper types by preparing data tables, one for each paper type, containing the number of dots-in-width of a black bar and the number of dots-in-width of a white bar (see Patent Document 2).

A still another problem is that, because the degree of the ink blur depends not only on the paper materials but also on various factors such as ink types, individual recording-head characteristics, and ambient environments, a barcode cannot sometimes be read because of differences in those usage conditions.

To solve this problem, a technique is proposed that generates barcodes suited to each usage environment by creating and actually printing many barcodes with different correction values and reading the printed barcodes with a barcode verifier (see Patent Document 3).
[Patent Document 1] Japanese Patent Laid-Open Publication No. 2003-237059
[Patent Document 2] Japanese Patent Laid-Open Publication No. Hei 08-123886
[Patent Document 3] Japanese Patent Laid-Open Publication No. Hei 08-044807

The problem with the technique disclosed in Patent Document 1 is that the technique, though effective when the degree of the dot blur is known in advance, does not work well when the paper type is changed.

The problem with the technique disclosed in Patent Document 2 is that, though the paper types are taken into consideration, a software barcode correction table must be added each time a new paper type is added.

In addition, the technique disclosed in Patent Document 3 is a method in which a large number of barcodes are created and printed with the correction values finely adjusted for the conditions of barcodes that are actually used (that is, barcode types such as EAN128 and CODE39, parameters specifying the number of digits and sizes of numeric values to be converted to barcodes) and, after that, the printed barcodes are read with a verifier for comparing the read results . The problem with this method is that the determination of appropriate barcode conditions involves a waste of a large amount of paper and time for printing.

This technique also has a verification pattern maintenance problem, because the addition of paper, which has conditions and the degree of the blur significantly different from those of the conventional ones, requires the addition of verification barcodes with a wider correction range.

### SUMMARY OF THE INVENTION

In view of the foregoing, it is an object of the present invention to provide a barcode generation system that can generate appropriate barcodes, which satisfy the requirement of each user, quickly and with a minimum amount of ink and paper.

A barcode generation system of the present invention is a barcode generation system that generates barcode data for printing a barcode. The barcode generation system comprises a storage unit that stores image data of a test chart for printing black bars and white bars of a barcode, each of the black bars and the white bars having a width of one of a plurality of different numbers of dots; a measurement unit that measures black bar and white bar widths of the barcode from an image on the test chart printed on a specific printing device based on the image data of the test chart; and a bar width correction unit that calculates a number of dots of each of black bar widths and white bar widths to be set at printing time as barcode correction values based on the measurement result of the measurement unit so that each of printed black bar widths and white bar widths becomes a predetermined width.

The measurement unit gives information on the actual measurement values of actual widths of bar elements (black bars and white bars), each of which has one of different dots-in-width (specified values), from the test chart printed under the condition of a certain printing device and a certain type of paper, giving the user the relation between dots-in-width and actual widths under that condition. This relation indicates the fact that, for example, the black bar width of 5 dots is equal to the white space width of 8 dots in their actual size on the paper surface. So, the bar width correction unit can calculate the number of dots of each of black bar widths and white bar widths to be set at printing time as the barcode correction values so that the black bar widths and white bar widths of the printed barcode each become a predetermined size. Printing a barcode under this condition using the barcode correction values enables a barcode of an appropriate element width to be printed even if there is a width variation factor in the barcode element width such as a dot blur.

There is also provided a computer readable recording medium for storing therein a barcode generation program of the present invention that generates barcode data for printing a barcode. The program causes a computer to execute the steps of measuring black bar and white bar widths of a barcode from an image on a test chart printed on a specific printing device based on image data of the test chart for printing black bars and white bars of the barcode, each of the black bars and the white bars having a width of one of a plurality of different numbers of dots; and calculating a number of dots of each of black bar widths and white bar widths to be set at printing time as barcode correction values based on the measurement result so that each of printed black bar widths and white bar widths becomes a predetermined width.

A printing device of the present invention is a printing device capable of printing a barcode. The printing device comprises a print unit that receives image data of a test chart, on which black bars and white bars of a barcode are printed, from an external device, each of the black bars and white bars having a predetermined width wherein correction values are calculated from actual measurement values of black bar and white bar widths on the test chart printed by the print unit and the barcode is printed based on the correction values. In this way, the printing device itself can also calculate the correction values from the actual measurement values of black bar and white bar widths.

In accordance with the present invention, an appropriate barcode, which satisfies the usage condition of each user such as the printing device installation environment, individual device characteristics, and type of paper used, can be generated quickly and with a minimum consumption of ink and paper.

In addition, the present invention, which uses a method that analyzes the test chart for measuring the widening and narrowing of a dot, eliminates the need for changing the software itself and the need for system maintenance even if the number of barcode types or paper types increases.

### BRIEF DESCRIPTION OF THE DRAWINGS

FIG. 1 is a diagram showing the general configuration of a barcode generation system in an embodiment of the present invention.
FIG. 2 is a block diagram showing an example of the control hardware configuration of a printing device in the embodiment of the present invention.
FIG. 3 is an enlarged view of a pattern configured by black bars and white spaces recorded by a recording unit shown in FIG. 1.
FIG. 4 is a diagram showing an example of a test chart printed to confirm the widening/narrowing of a black bar in the embodiment of the present invention.
FIG. 5 is a diagram showing an example of a test chart printed to confirm the widening/narrowing of a white space in the embodiment of the present invention.
FIGS. 6A and 6B are graphs showing the relation between the number of printed dots-in-width and the actual width sizes on a paper surface obtained based on the test charts shown in FIG. 4 and FIG. 5.
FIG. 7 is a diagram showing the configuration of the barcode generation system in the embodiment of the present invention.
FIG. 8 is a diagram showing an example of the configuration of a relation table obtained from a test chart and showing the relation between the number of dots and black bar widths and white space widths in the embodiment of the present invention.
FIGS. 9A and 9B are diagrams showing the correction value tables of two types of barcodes as an example of barcode correction values shown in FIG. 7.
FIG. 10 is a diagram showing the operation of the barcode generation system in the embodiment of the present invention.
FIG. 11 is a flowchart showing an appropriate barcode generation processing of the barcode generation system in the embodiment of the present invention.
FIG. 12 is a diagram showing a drawing area of a barcode in the embodiment of the present invention.
FIG. 13 is a diagram showing the difference between area preferential and rank preferential in the embodiment of the present invention.
FIG. 14 is a diagram showing an example of the input screen in another embodiment of the present invention.
FIG. 15 is a diagram for explaining the satellite droplets of an inkjet printing device as mentioned above.
FIGS. 16A and 16B are diagrams showing the states of satellite droplets generated in an inkjet printing device.
FIG. 17 is a diagram showing an example of another type of test pattern which replaces the test pattern shown in FIG. 4.
FIG. 18 is a diagram showing an example of another type of test pattern which replaces the test pattern shown in FIG. 5.
FIG. 19 is a diagram showing a measurement result table which represents the relation between dots-in-width and actual measurement values of black bar width and white space width.
FIG. 20 is a diagram showing another example of the relation table 800 created from the reading of the test chart to show the relation among the number of dots-in-width, a black bar width, and a white space width from 1 dot to 25 dots or more at interval of 1 dot.
FIGS. 21A and 21B are diagrams showing correction value tables that are examples of the barcode correction values shown in FIG. 20 for different types of barcode.

### DETAILED DESCRIPTION OF PREFERRED EMBODIMENTS

Preferred embodiment of the present invention will be described below with reference to the drawings. The configuration shown below is only exemplary, and it should be noted that the scope of the present invention is not limited to the configuration shown.

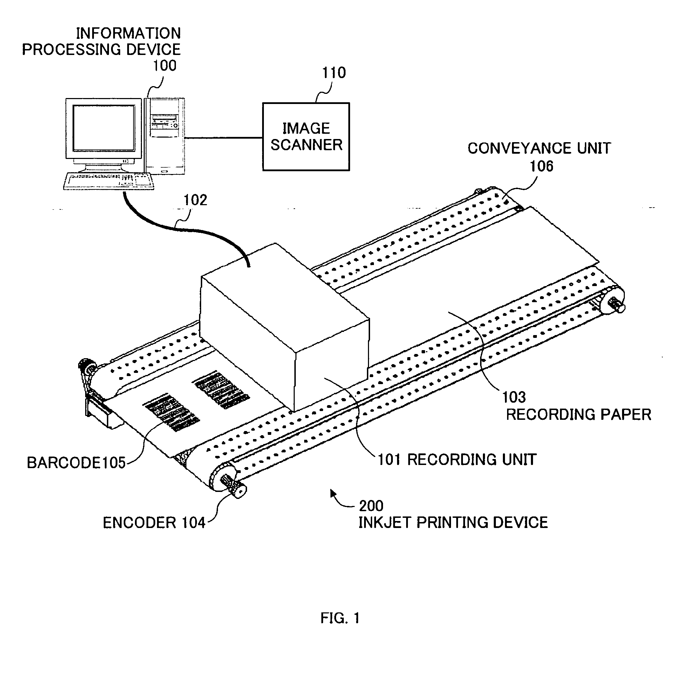

FIG. 1 is a diagram showing the general configuration of a barcode generation system in an embodiment. This system comprises an information processing device 100, an image scanner 110, and a printing device 200. The printing device 200, an inkjet printing device employing the inkjet ejection method that uses thermal energy, comprises a conveyance unit 106 that conveys a paper sheet 103 that is one type of a printing medium, an encoder 104 that detects the conveyance speed of the paper 103, and a recording unit 101 that performs inkjet recording for recording image data. This recording unit 101 is connected to the information processing device 100 via an interface cable 102 such as a USB cable. The information processing device 100 is a device, for example, a personal computer (PC), that transfers a control command, such as an image data transfer command or a cleaning command, to the printing device 200. The image scanner 110 is connected to the information processing device 100 as one of its peripheral devices to optically read a test chart on which a pattern, which will be described below, is recorded.

In response to the paper detection signal received from the conveyance unit 106 and in synchronization with the paper speed signal received from the encoder 104, the recording unit 101 ejects ink droplets on the conveyed paper 103 to record image data. One-dimensional barcodes 105 are shown in FIG. 1 though any image can be recorded.

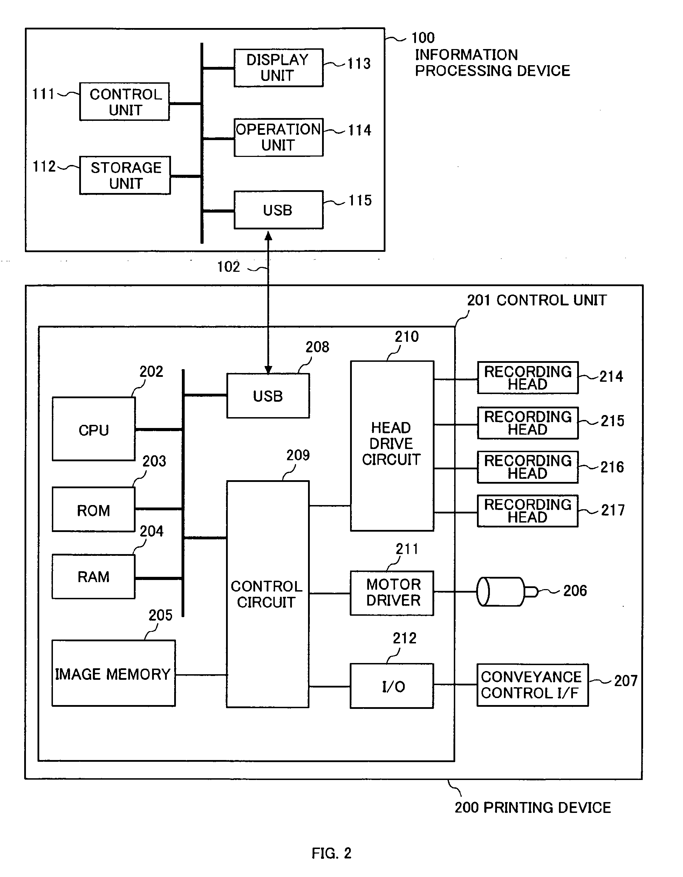

FIG. 2 is a block diagram showing an example of the control hardware configuration of the information processing device 100 and the printing device 200 in the system shown FIG. 1.

The information processing device 100 comprises a control unit 111, configured by a central processing unit (CPU), and causes this control unit 111 to execute the control program stored in a storage unit 112 for controlling the components. The storage unit 112 may include ROM (Read Only Memory), RAM (Random Access Memory), and HDD (Hard Disk Drive), etc. A display unit 113, which includes a display such as LCD (Liquid Crystal Display) or CRT (Cathode Ray Tube) display, displays information to the user. An operation unit 114, which includes a keyboard and a mouse, etc., accepts an operation or information from the user. USB interface 115 is shown as an example of the printer interface for connecting the information processing device 100 to the printing device 200. The printer interface is not limited to the USB.

A control unit 201 of the printing device 200 comprises a central processing unit (CPU) 202 and causes this CPU 202 to execute the control program stored in a non-volatile memory (ROM) 203 for controlling the components. The control unit 201 further comprises a memory (RAM) 204 used by the CPU 202 as a work area or a reception buffer for processing various types of data and an image memory 205 used as the image expansion unit via a control circuit 209. In addition, via the control circuit 209, the CPU 202 controls a head drive circuit 210 that drives recording heads 214-217, a motor driver 211 that drives a motor 206 that controls the cleaning operation, which keeps the recording heads in the best state for recording, and the recording operation, and an input/output interface control unit (I/O) 212 of a paper conveyance unit 207 that feeds a paper under the recording head.

The printing device 200 has a USB controller 208 that receives image data and a cleaning command, basically received from the information processing device 100 that is an external device, via the printer cable 102 implemented by an interface such as the USB interface. The printing device 200 operates according to the various commands that are received.

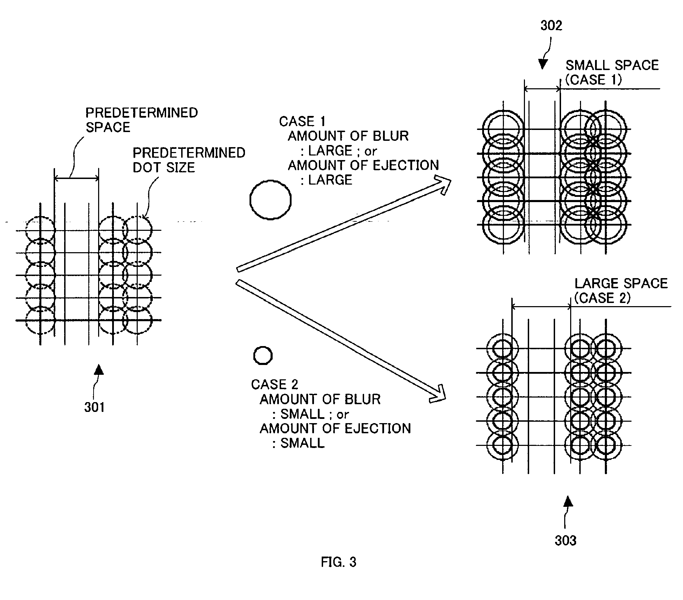

FIG. 3 is an enlarged view showing a pattern recorded by the recording unit 101 as a pattern such as a barcode composed of black bars and white spaces. The black bar is a linear element recorded in black ink, and a white space, also called a white bar, is a linear element that is a non-recorded blank part.

The size of a dot recorded by the printing device 200 varies according to the ink ejection amount that depends on the conditions such as the usage environment, individual recording-head characteristics, and ink types and on the blurring rate that depends on the paper material. When the ink ejection amount is large or the blurring rate is high in relation to a pattern 301 of the ideal dot size, the black bar becomes wide and the white space becomes narrow as shown by a pattern 302 (In the figure, a bold solid line indicates the size of a dot actually recorded) . Conversely, when the ejection amount is small or the blurring rate is low, the black bar becomes narrow and the white space becomes wide as shown by a pattern 303.

The widening and narrowing of a black bar/white space greatly affect the barcode reading accuracy. The reading quality of the patterns 302 and 303 gets worse than that of the pattern 301 of the ideal dot size and, in the worst case, the barcodes cannot be read.

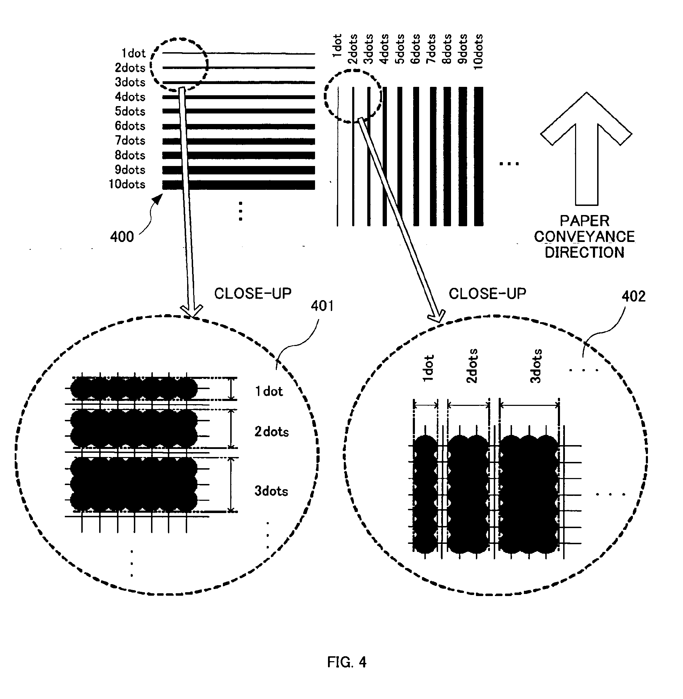

FIG. 4 is a diagram showing an example of a test chart printed to confirm the widening and narrowing of black bars in this embodiment. The test pattern is used for correcting widths of black bars, comprising a positive area in which black bars of different dots-in-width are arranged. This test chart 400 includes two black bar groups: a black bar group 401 composed of black bars each extending in the direction vertical to the paper conveyance direction and a black bar group 402 composed of black bars each extending in the convex direction parallel to the paper conveyance direction. In the example shown in the figure, each of the black bar groups 401 and 402 is composed of 10 black bars ranging from a black bar of one dot to a black bar of ten dots (i.e. dots-in- width).

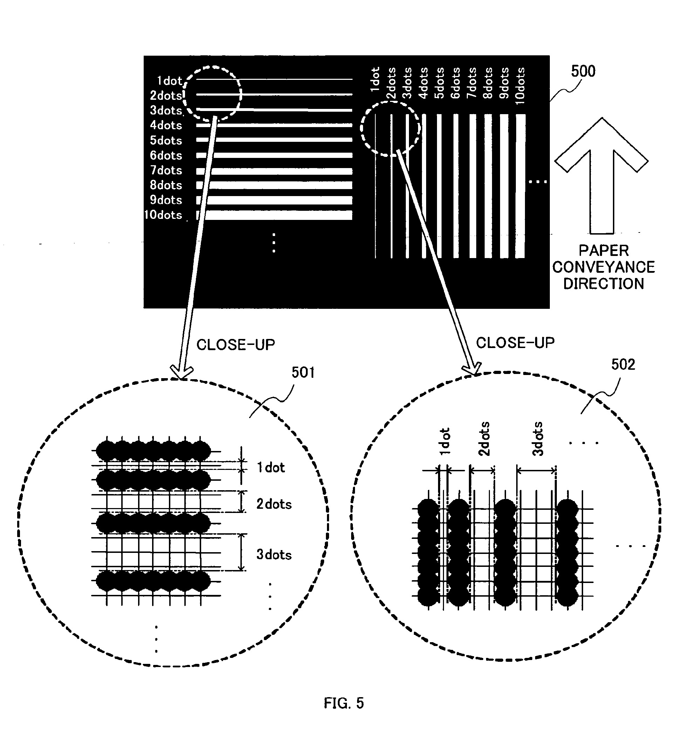

FIG. 5 is a diagram showing an example of a test chart printed to confirm the widening/narrowing of white spaces in this embodiment. The test pattern is used for correcting widths of white bars (i.e. spaces), comprising a negative area in which white bars of different dots-in-width are arranged. A test cart 500 includes two white space groups: a white space group 501 composed of white spaces each extending in the direction vertical to the paper conveyance direction and a white space group 502 composed of white spaces extending in the convex direction parallel to the paper conveyance direction. In the example shown in the figure, each of the white space groups 501 and 502 is composed of 10 white spaces ranging from a white space of one dot to a white space of ten dots.

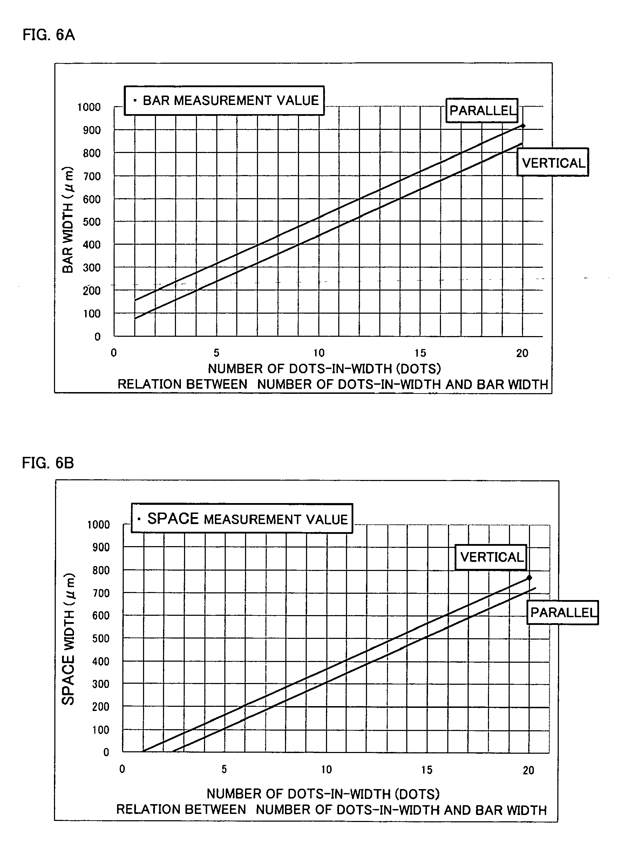

FIG. 6A and FIG. 6B are graphs each showing the relation between the number of dots-in-width of a recorded bar and the actual width size (actual measurement value) on the paper surface. The relations are obtained by actually measuring the width size (bar width and space width) of a black bar and a white space on the paper surface when the test charts, shown respectively in FIG. 4 and FIG. 5, are printed. That is, printing the test chart in this embodiment under the actual usage conditions (device, environment, paper, etc.) gives information on the actual width sizes with consideration for the difference in the ejection amount caused by the individual recording-head characteristics and the difference in the blurring rate caused by the paper type and, based on this information, allows barcode data to be generated with the black bar width size and the white space width size corrected according to the actual width sizes. The analysis method of the test chart will be described below.

Note that the measurement result may differ between a bar and a space "vertical" to the paper conveyance direction and a bar and a space "parallel" to the paper conveyance direction. This is because, though an attempt is made to configure barcodes of the same width, the satellite droplets explained hereinafter, separated from the main droplet of ejected ink, make the bar width different between a bar configured in parallel to the conveyance direction and a bar configured vertically to the conveyance direction, especially, on an inkjet printing device that performs one-pass printing. So, although the graphs shown in FIGS. 6A and 6B can be created separately for a "vertical" barcode and for a "horizontal" barcode, only one of a "vertical" barcode and a "horizontal" barcode is described below for convenience.

In each of FIGS. 6A and 6B, measurement results in respective cases of "parallel" and "horizontal" are shown. As seen from the graphs, even the same dots-in-width size of a bar and a space could result in that the bar width is greater than white space in actual size. In case of bar, the actual size in "parallel" is greater than that in "vertical" whereas in case of space, the actual size in "vertical" is greater than that in "horizontal" . These graph based on the measurement values can be used for estimating the relation between dots-in-width of bars and spaces not included in the test chart and their actual width sizes.

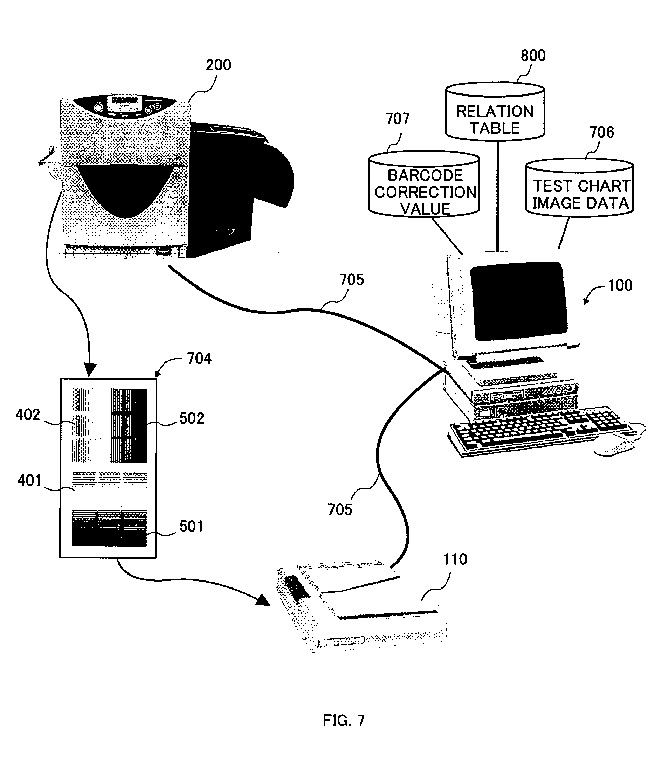

FIG. 7 is a diagram showing the configuration of the barcode generation system in this embodiment.

A test chart 704, which includes the black bar groups 401 and 402 and the white space groups 501 and 502 shown in FIG. 4 and FIG. 5, can be printed by transferring test chart image data 706, stored in the storage unit 112 of the information processing device 100, from the information processing device 100 to the printing device 200 via a USB cable 705. To produce the most effective test chart 704, the recording unit 101 (FIG. 1) should print it on the printing device 200 under the condition similar to the actual usage condition (printing device, print environment, paper used, etc.) as described above. The test chart 704 printed on the paper is set on the image scanner 110 for reading. The information processing device 100 receives the image information, which has been read, via the USB cable 705, and the control unit 111 of the information processing device 100, which works as the measurement unit of the present invention, checks the bar elements of various widths printed on the test chart 704 to obtain the actual width size information. Based on this actual width size information, the control unit 111, which also works as the bar width correction unit, generates barcode correction values 707 that will be described below and stores the generated barcode correction values in the storage unit 112. A relation table 800, which will be described below, is also stored in the storage unit 112.

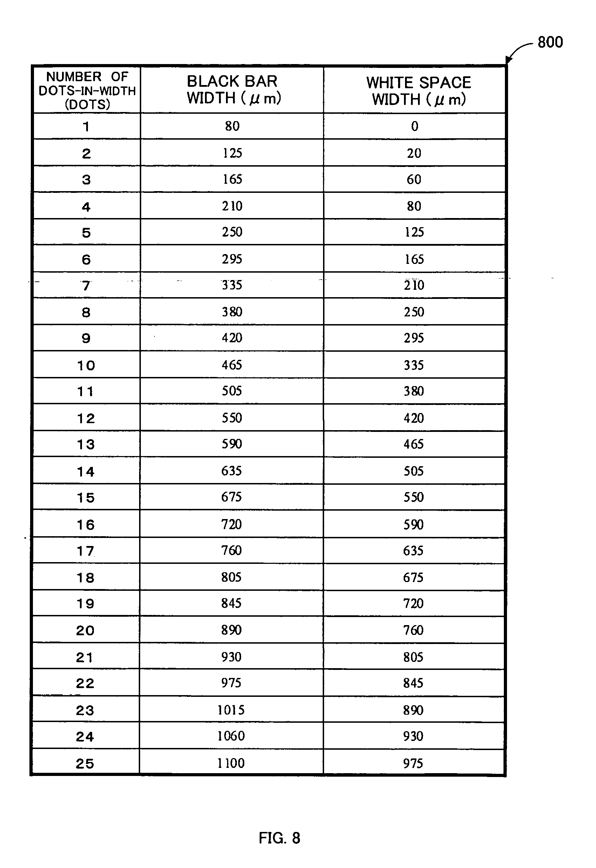

FIG. 8 is a diagram showing an example of the relation table 800 created from the reading of the test chart to show the relation among the number of dots-in-width, a black bar width, and a white space width. For black bars and white spaces of various numbers of dots-in-width (in dots) specified in image data obtained by reading the test chart 704 by means of the image scanner 110, this data shows the result obtained by measuring the actual width size (in micrometers) of a black bar and a white space actually landed and blurred on the paper surface. Therefore, the relation table 800 is created for each of different actual usage conditions. More specifically, the table shows, for example, that a 10-dot black bar width is 465 µm and, a 10-dot white space width is 335µm, on the paper surface. The data shown in FIG. 8 should match the result of the graph shown in FIGS. 6A and 6B but, in this example, the compatibility between them is not maintained for convenience. It should be noted that, though the relation table 800 shown in FIG. 8 can also be created separately for each of "vertical" and "horizontal" barcodes, only one of them is shown here.

In the meantime, the one-dimensional barcode is classified roughly into two types: binary level and multi level. A binary-level barcode is a barcode configured by two types of black bar and two types of white space. The ratio of widths of the two types of black bar is 1:2. This ratio applies also to a white space. Typical binary-level bar codes are Code39 and ITF. A multi-level barcode is a barcode configured by four types of black bar and four types of white space. The ratio of widths of the four types of black bar is 1:2:3:4. This ratio applies also to the white space. Typical multi-level barcodes are JAN, EAN128, and Code128.

For example, in correcting a multi-level barcode, it is recommended that the numbers of dots-in-width of black bars be selected so that the ratio of actual width sizes becomes 1:2:3:4 based on the relation between black bars and white spaces shown in FIG. 8 and that the numbers of dots-in-width be selected so that the actual width size of a black bar is equal to the actual width size of a white space. Selecting the number of dots in this way leads to the creation of highly-readable, appropriate barcodes.

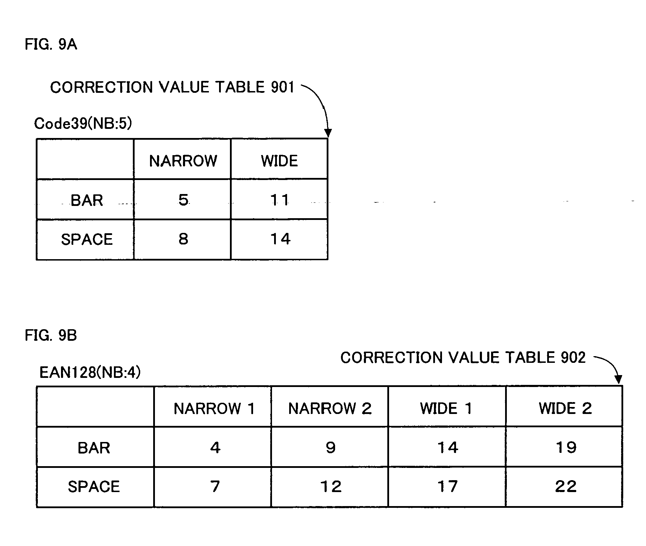

The following describes more in detail how to determine the correction values of the binary-level barcode Code 39 and the multi-level barcode EAN128 with reference to FIG. 8 and FIG. 9.

FIGS. 9A and B show correction value tables 901 and 902 that are examples of the barcode correction values 707 shown in FIG. 7. The correction value table 901 shown in FIG. 9A shows the corrected dot configuration of narrow bar (NB) width of 5 dots in the Code39 barcode format. This corrected dot configuration is obtained as follows. The relation table 800 shown in FIG. 8 indicates that the black bar width of the narrow bar of 5 dots is 250µm. The number of dots of the narrow space is determined to be 8 dots by searching the relation table 800 for the number of dots corresponding to 250µm that is equal to the size of the narrow bar. As a result, the actual size of the black bar width of 5 dots becomes equal to the actual size of the white space width of 8 dots on the paper surface. Because the ratio in width between the narrow bar and the wide bar or between the narrow space and the wide space is 1:2, the number of dots corresponding to the width closest to 250µm x 2 = 500µm is searched for from the relation table 800. And, the dots-in-width of the wide bar is determined to 11 dots whose actual black bar width corresponds to 505µm that is closest to 500µm, and the dots-in-width of the wide space is determined to be 14 dots whose actual white space width is 505µm that is closest to 500µm. Thus, the actual width sizes of bars and spaces on the paper surface determined in this way satisfy the condition for the standard, that is, "narrow bar width x 2 = wide bar width" and "black bar width = white space width", that is one of the important factors of the barcode reading rate.

The correction value table 902 shown in FIG. 9B shows the corrected dot configuration of narrow bar (NB) width of 4 dots in the EAN128 barcode format. This corrected dot configuration is obtained as follows. The relation table 800 shown in FIG. 8 indicates that the actual black bar width of the narrow bar width of 4 dots is 210µm. The dots-in-width sizes of black bars representing four values in the ratio of 1:2:3:4 are calculated, respectively, as 210µm, 420µm, 630µm, and 840µm. Using the same method described above, the numbers of dots-in-width corresponding to the width sizes are determined as 4 dots, 9 dots, 14 dots, and 19 dots from the relation table 800 shown in FIG. 8. Similarly, the space widths corresponding to 210µm, 420µm, 630µm, and 840µm are determined as 7 dots, 12 dots, 17 dots, and 22 dots. Thus, the actual width sizes of bars and spaces on the paper surface determined in this way satisfy the condition for the standard, that is, "ratio of 1:2:3:4" and "black bar width = white space width", that is one of the important factors of the barcode reading rate.

The correction value tables 901 and 902, as well as the barcode type information, are saved in the storage unit 112 of the information processing device 100.

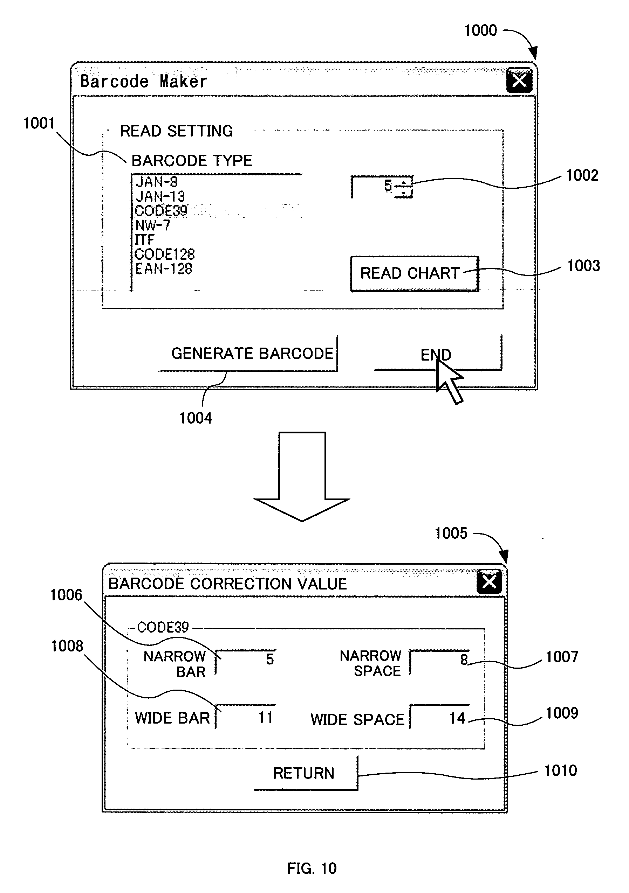

FIG. 10 is a diagram showing the operation of the barcode generation system in this embodiment.

An input screen 1000 of the barcode creation application executed on the information processing device 100 comprises a Barcode Type Selection box 1001 in which a desired barcode type is selected from barcode options, a Number of Dots Entry box 1002 in which the number of dots-in-width of a narrow bar, which is the base bar width information, is entered, a Read Chart button 1003 used to instruct to read the test chart, a Generate Barcode button 1004, and an End button. When the user presses the Read Chart button 1003, the barcode creation application reads the print output of the test chart 704 that is set on the image scanner 110, and creates the relation table 800, such as the one shown in FIG. 8, based on the number of dots of element widths and the actual measurement values based on an image that is read. In addition, when the user presses the Generate Barcode button 1004, the barcode creation application calculates appropriate barcode correction values that match the barcode type and the number of dots of narrow bar specified by the user on the input screen 1000, and outputs a barcode correction value screen 1005. For a binary-level barcode, the barcode creation application displays an appropriate number of dots-in-width in a Narrow Bar box 1006, a Narrow Space box 1007, a Wide Bar box 1008, and a Wide Space box 1009 on the barcode correction value screen 1005. When the barcode creation application also has the barcode print function, appropriate numbers of dots-in-width are stored in the storage unit 112 of the information processing device 100 for use in later barcode printing. It is also possible for the display boxes on the barcode correction value screen 1005 to accept corrections from the user. For example it is possible for the boxes to accept minor adjustments from the user to reduce the dot width by one dot to make the barcode smaller at the sacrif ice of the barcode quality.

When the barcode creation application does not have the barcode print function, the user can use the barcode correction value screen 1005 to confirm the correction values. After the confirmation, the user can specify the bar widths and the space widths in the dot configuration input boxes (not shown) of standard barcode generation software. Doing so results in generating the appropriate barcodes with a higher reading rate.

For a multi-level barcode, appropriate numbers of dots-in-width are displayed in the bar/space display boxes, not shown, corresponding to four values.

Note that, the input screen 1000 and the barcode correction value screen 1005 that are shown correspond to one of "vertical" and "horizontal" barcodes. Instead of this, a menu or a button may also be provided on one of the input screen 1000 and the barcode correction value screen 1005 to allow the user to select one of "vertical" barcodes and "horizontal" barcodes.

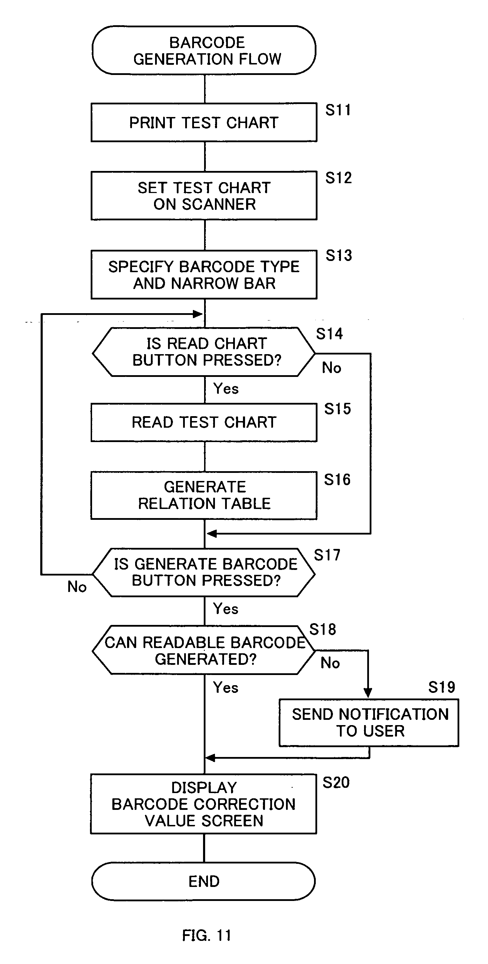

FIG. 11 is a flowchart showing how the barcode generation system in this embodiment generates appropriate barcodes. To execute this processing, the control unit 111 of the information processing device 100 reads the program from the storage unit 112. This processing need not be executed each time the barcode is printed, but should be executed only when the actual usage environment is changed, for example, when the barcode printer or the paper material is changed.

This processing is started in response to an instruction from the user and, immediately after the processing is started, the test chart in the actual usage environment is printed (S11). The user sets the printed test chart on the image scanner 110 . If the printing device 200 has the scanner function, the user does not have to do this action. This test chart is set of the image scanner (S12).

Next, the user-specified barcode type (1001) and the narrow bar condition (1002) are accepted through the input screen 1000 (FIG. 10) of the barcode creation application, and the specified conditions are set (S13). When the user issues a barcode read instruction (Read Chart button 1003 is pressed) (Yes in S14), the image scanner reads the image of the test chart. The result (image) that has been read is analyzed to generate the relation table 800 which is saved in the storage unit 112 (S16). After that, when a barcode generation instruction is issued (Generate Barcode button 1004 is pressed) (Yes in S17), a check is made if the barcode corresponding to the specified condition can be generated as barcodes having the readable quality (S18). This checking is made based on the determination of the barcode ranks (read ranks). The determination of ranks will be described below in detail. The whole barcode size is fixed in advance or can be specified by the user. When the user specifies the size, it is possible to add the entry box to the input screen 1000 to allow the user to specify the size in step S13.

If it is determined that the read quality of the generated barcodes does not reach a predetermined level, a notification notifying the fact is sent to the user (S19) . This notification is the display of any message such as a text, a symbol, and an image or the production of a sound. If it is determined that the read quality is at a predetermined level or higher, barcode correction values (number of dots-in-width) for generating appropriate barcodes are calculated, and the barcode correction value screen 1005 is displayed (S20). When the application has the barcode print function, the barcode correction values are saved in the storage unit 112 so that they are reflected on the later barcode printing.

If there is a change, not in the actual usage environment, but only in the barcode type and the narrow bar width, the test chart need neither be printed nor scanned but it is only required that the processing be executed beginning in step S13 in which the barcode type and the narrow bar are set.

Although an example of a black bar and a white space, which are 1-10 dots wide, is used in the test chart shown in the embodiment described above, the relation between the number of dots-in-width and actual width sizes is approximately proportional as shown in FIGS. 6A and 6B . So, when at least two actual measurement values, for example, the actual measurement values for 5 dots and 10 dots are available for each of black bars and white spaces, the graphs in FIGS. 6A and 6B can be created. Of course, the actual measurement values may be calculated for the every number of dots in the dot configuration range. For higher-quality barcode generation, the dot configuration range can be extended from the range of 1 to 10 dots to the range of 1 to 100 dots.

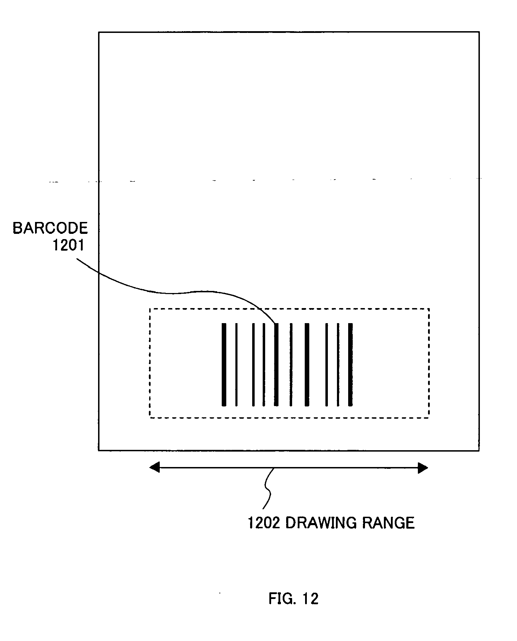

Although a narrow bar width size is entered to generate barcodes as shown in the Number of Dots Entry box 1002 in FIG. 10, it is also possible to specify a barcode drawing range (drawing area) 1202 of a barcode 1201 as shown in FIG. 12 for generating an appropriate barcode that fits in the specified area. In this case, if a barcode satisfying the read rank cannot be generated in the specified area, it is desirable that a notification be sent to the user.

In addition, though the example is shown in which the output information is represented by the number of dots-in-width of a barcode as shown on the barcode correction value screen 1005 in FIG. 10, it is also possible to output a bit-mapped image representing the barcode image itself. In this case, the input screen 1000 of the barcode creation application in FIG. 10 may include an entry box in which the user specifies a character string to be represented by the barcode and the size (corresponding to the height and length of the barcode) of the barcode area. The user can use the displayed image of a barcode via the copy-and-paste operation.

Next, the following describes barcode ranks.

The above description implies that, in determining the integral number of dots in the relation table 800, there is not always the number of dots corresponding to the actual measurement value that completely matches the theoretical value of a bar width. That is, the selected number of dots may involve an error of the maximum of 0.5 dot. So, the "appropriate correction values" includes an error and, even when the ideal ratio is 1:2:3:4, only the ratio of corrected values, for example, 0.9 : 2.1 : 3.0 : 3.9, is given. From this point of view, the ranks of barcodes that will be generated are estimated. The ranks are described in detail in ISO/IEC15416, ANSI X3.182, JIS X0520, etc. The actual ranks are determined from many estimation factors such as reflectance and decodability.

In general, the barcode quality is represented by read ranks 0.0-4.0. In some cases, the read ranks 0.0-4.0 are divided into five levels represented by alphabetic letters A, B, C, D, and E. In general, the measures of rank quality are as follows.
Rank A: Quality at which a barcode can be read by scanning it only once
Rank B: Quality at which a barcode can be read by scanning the same position two or more times
Rank C: Quality at which a barcode can be read by scanning different positions
Rank D: Quality at which a barcode can be read by scanning different positions two or more times. The barcode cannot be read depending upon the reader.
Rank E: Defective barcode. The barcode can sometimes be read depending upon the ability of the reader but is not recommended for use in a system.

Next, another embodiment of the present invention related to those ranks will be described. The configuration and the operation of a system in this embodiment are essentially the same as those of the embodiment described above and, therefore, the duplicate description is omitted.

When printing a barcode, not only the barcode type and the number of dots-in-width of a narrow bar but also the whole size of the barcode is an important factor. Therefore, as described above, the user is sometimes required to specify an area (corresponding to the barcode height and length) in which the barcode is printed. In general, a smaller number of dots-in-width of the narrow bar reduce the whole size of the generated barcode. If priority is given to storing a barcode in a specific area (area preferential), the barcode size is reduced at the sacrifice of its quality (rank). Conversely, a larger number of dots-in-width increases the barcode size but improves quality (rank).

In fact, space saving is sometimes required to satisfy the condition such as the label design and the number of digits to be encoded as a bar, while in other cases extra space is allowed to some degree. Therefore, in selecting the barcode quality (rank), rank B or higher is sometimes required, while in other cases it is only required that a barcode can be read (for example, rank D) . With this situation in mind, this embodiment provides the user with options, that is, area preferential and rank preferential (i.e. quality preferential), to allow the user to select one of them.

To do so, in step S13 in FIG. 11, the user can specify not only the barcode type and the narrow bar but also which priority to select, area preferential or rank preferential.

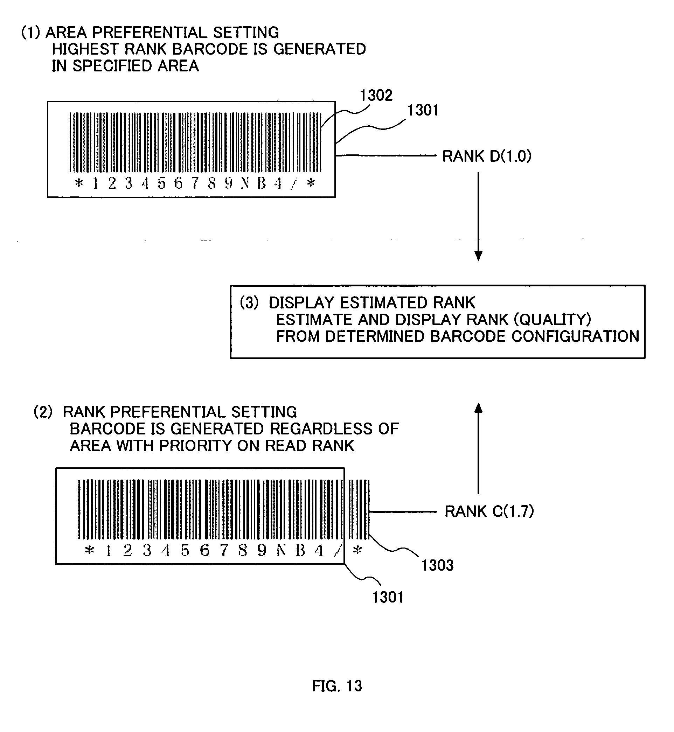

FIG. 13 is a diagram showing the difference between area preferential and rank preferential more specifically. In the area preferential, the barcode correction values are determined so that the barcode is stored in an area 1301 for which the barcode height and the barcode width are specified, and the rank is estimated for a barcode 1302 generated based on the barcode correction values. If priority is given to the area in this way, the rank of the generated barcode is sacrificed. That is, the user-specified number of dots-in-width of the narrow bar may sometimes be reduced by the system automatically. Alternatively, another configuration is also possible in which, if the system determines that the barcode generated by the specified number of dots cannot be stored in the specified area, a message is issued to prompt the user to reduce the number of dots-in-width of the narrow bar. In the example in the figure, the barcode generated by the area specification is estimated to have rank D (rank 1.0). The user can confirm the rank, generated in this way, on the display screen. In this case, it is also possible to display the barcode image, such as the one shown in FIG. 12, with the rank.

If rank preferential is used in the example in FIG. 13, the user-specified dots-in-width of the narrow bar is used directly. In this case, however, a generated barcode 1303 may sometimes run off the area 1301. In the example in the figure, the barcode generated by the rank specification is estimated to have rank C (rank 1.7) higher in the quality than rank D.

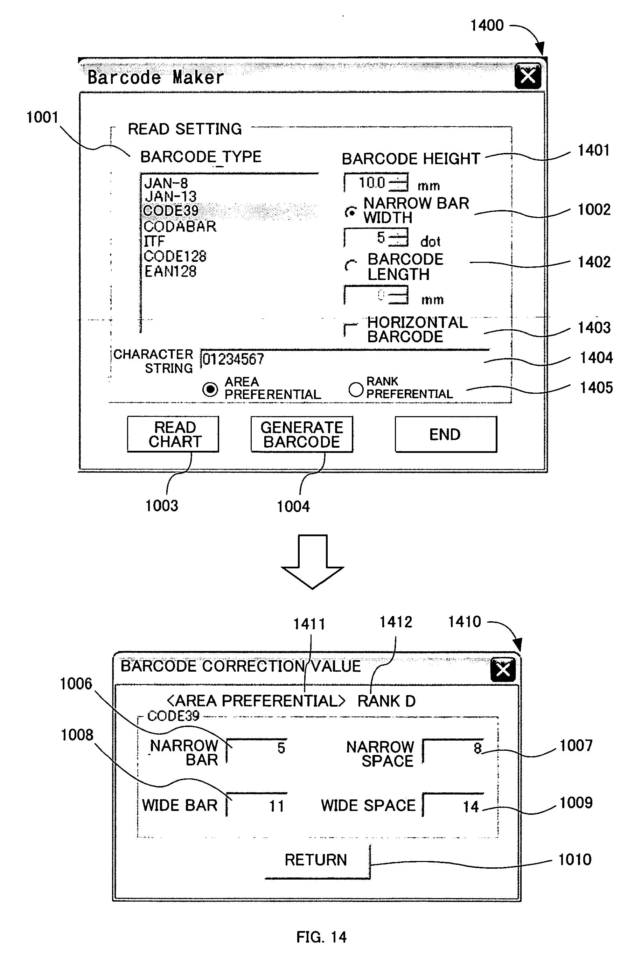

FIG. 14 shows an example of an input screen 1400 in this embodiment that is used instead of the input screen 1000 of the barcode creation application in FIG. 10. In FIG. 14, the same reference numeral is used to denote the same element shown in FIG. 10 and further description of that element will be omitted. The input screen 1400 further includes entry boxes 1401 and 1402 in which the barcode height and barcode length for specifying the area of a barcode are entered, a check box 1403 that specifies whether the bar is a horizontal bar, an entry box 1404 in which a standard character string having the number of characters corresponding to the barcode of the type is entered, and radio buttons 1405 used to select area preferential or rank preferential.

FIG. 14 also shows an example of a barcode correction value screen 1410 used in this embodiment instead of the barcode correction value screen 1005 in FIG. 10. The barcode correction value screen 1410 displays a selected priority type 1411 and a rank 1412 of the barcode , generated based on the barcode correction values, at the same time. The user, who is not satisfied with the result displayed on this barcode correction value screen 1410, can also press a Return button 1010 to return to the barcode correction value screen 1410 for changing the settings and display the barcode correction value screen 1410 again on an error and trial basis. In this case, when the actual usage environment remains the same, there is no need to print and read the chart again.

Instead of providing the radio buttons 1405 for selecting one of area preferential and rank preferential on the input screen 1400 in FIG. 14, another configuration is also possible in which the rank preferential is set as the default setting and, when the system detects that thebarcode, generated based on the number of dots-in-width of the user-specified narrow bar, cannot be stored in the specified area, a warning message is output to notify the user about this condition. In response, the user can either change the priority type to the area preferential or extend the area.

Conversely, it is also possible that the area preferential is set as the default and, when the system detects that the rank of the barcode, generated based on the determined barcode correction values, has been decreased because the area preferential is selected, a warning message is output to notify the user about the condition.

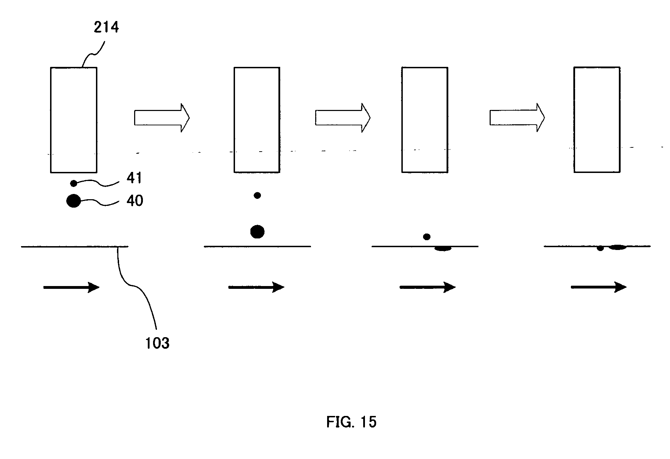

FIG. 15 is a diagram for explaining the satellite droplets of an inkjet printing device as mentioned above. This schematically represents the states varying in time until the satellite droplet reaches the surface of paper sheet. When ink is ejected from a recording head (i.e. recording head 214, a major ink droplet 40 for forming an image first reaches paper 103, and then with a slight delay, a satellite droplet 41 following the major droplet 40 reaches the paper 103. The satellite droplet 41 is smaller in size than the major droplet 40. The paper 130 is moved relatively against the recording head 214 in one direction as shown by an arrow, and hence, the satellite droplet 41 will form a dot behind the dot of the major droplet 40 on the paper in the paper conveyance direction. An assumption is made in this embodiment that the printer uses a so-called line-type recording head which have muzzles extending across the entire width of paper. However, the satellite droplet will affect in the same manner even in case of a so-called serial-type recording head which is moved back and forth across the width of paper, in the direction perpendicular to the paper conveyance direction. That is, the satellite droplet will form a dot always following behind the dot formed by the major droplet.

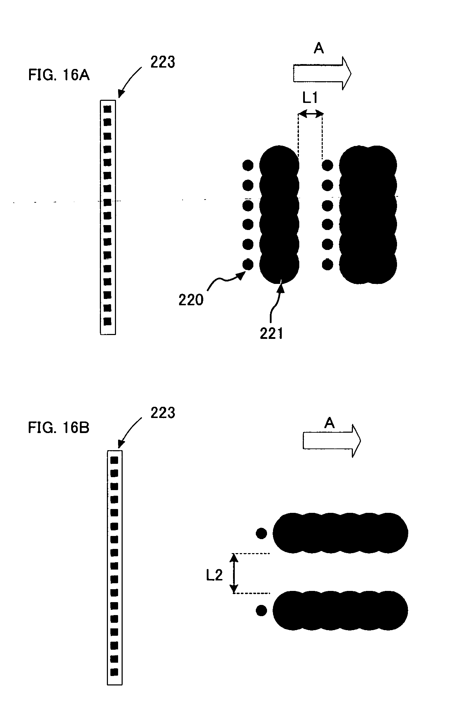

FIG. 16A shows the state of satellite droplets generated when forming a barcode having bars each being in parallel with nozzle array 223 in an inkjet printing device. This represents a case where paper is moved in the "A" direction with respect to a line-type recording head. Since satellite droplets 41 create dots on paper always behind those of major droplets 40 as mentioned above, the barcode with bars each being perpendicular to the paper conveyance direction (i.e. parallel to the nozzle array) could have black bars greater in width than white spaces therebetween because of the effect of satellite-droplet dot array 220 adjacent to major-droplet dot array 221.

FIG. 16B shows the state of satellite droplets generated when forming a barcode having bars each being perpendicular to the nozzle array 223 in the inkjet printing device. In the barcode shown in FIG. 16B, the satellite-droplet dot array overlaps the major-droplet dot array so that most of the satellite droplets are on and absorbed in major droplet dots, unlike in the case of FIG. 16A. In addition, the satellite droplets in this case are shifted with respect to the major droplets in the direction in which the sift has no effects on the bar width. Therefore, the satellite droplets, even if generated, will not cause the black bar much greater in width than the white space.

For this reason, in an inkjet printing device with satellite droplets generated, the direction of barcode also could affect the widths of black bars and white spaces. And, hence, it is necessary to generate appropriate barcodes for the respective cases.

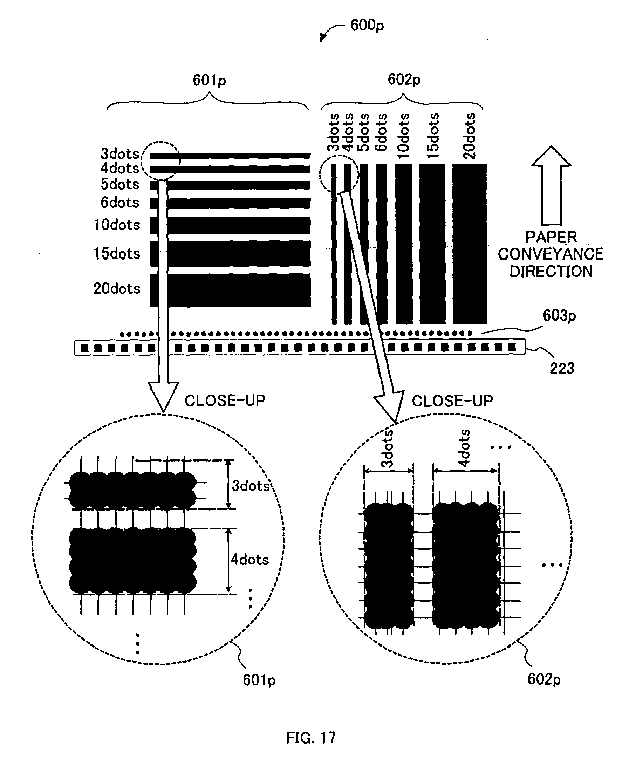

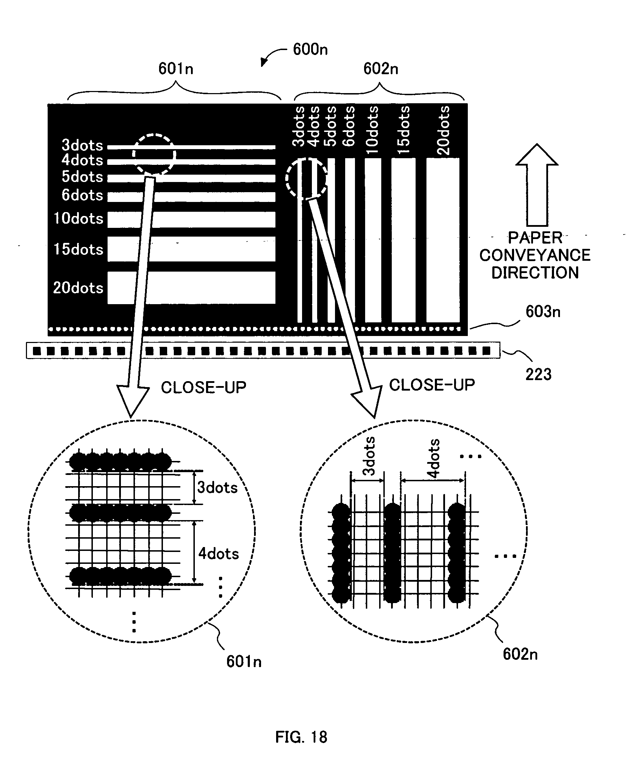

FIGS. 17 and 18 show an example of another type of test pattern 600 (i.e. 600p and 600n) which replaces the test pattern shown in FIGS. 4 and 5. The example of FIGS. 4 and 5 show the test pattern including bar widths (and space widths) between 1 dot to 10 dots consecutively in the number with an interval of 1 dot. The example shown in FIGS. 17and 18 shows a test pattern including bar widths (and space widths) of 3, 4, 5, 6, 10, 15, 20 dots which are not consecutive in the number of dots-in-width.

More specifically, the test pattern 600p in FIG. 17 is a positive test pattern including black bar group, i.e. a black bar group 601p which includes a plurality of black bars each being parallel with the nozzle array 223, and a black bar group 602p which includes a plurality of black bars each being perpendicular to the nozzle array 223. Each of the black bar groups includes seven different bar widths, i.e. , dots-in-width of 3, 4, 5, 6, 10, 15, 20 dots. It should however be noted that the number of the bar widths of a barcode need not be seven, but at least two are sufficient. Each dot of dot array 603p is formed by a single ink droplet (black dot). The dot array 603p is used for confirmation of the size of a black dot, although this is not related to the operation of this embodiment.

The test pattern 600n in FIG. 18 is a negative test pattern including white bar (i. e. space) group, i. e. a white bar group 601n which includes a plurality of white bars each being parallel with the nozzle array 223, and a white bar group 602n which includes a plurality of white bars each being perpendicular to the nozzle array 223. Each of the white bar groups also includes seven different bar widths, i.e., dots-in-width of 3, 4, 5, 6, 10, 15, 20 dots. At least two of the widths of white bars are sufficient. Each dot of dot array 603n is formed by a single white dot space. The dot array 603n is used for confirmation of the size of a white dot space, although this is not related to the operation of this embodiment.

The test patterns 600p and 600n are recorded together on a page to form a test chart.

When using a relatively many types of bar widths in a test pattern, as in the example of dots-in-width of 3, 4 , 5 , 6 , 10 , 15 , 20 dots, it is preferable to include into the test pattern more of relatively thin widths than fat widths. The smaller the bar width is, the more restrict is the tolerance needed for actual barcodes. The larger the bar width is, the less restrict is the tolerance needed and there may be no effects on the read rank of the barcode even though the width size is incorrect to a certain extent. For this reason, when the test pattern is allowed to include a lot of bars of different dots-in-width, including more of thin bar widths is effective to enhance the accuracy of thin bars and hence improve the quality of barcodes generated.

When preparing a plurality of different types of test chart depending upon the size of paper sheet, it is advantageous to put more of bars of thinner widths in the test pattern.

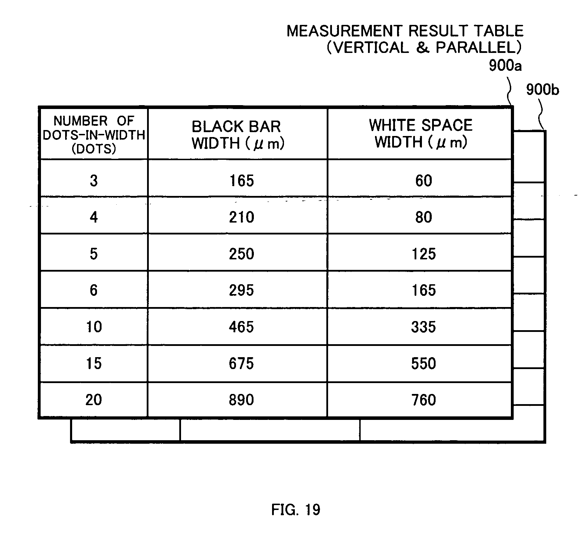

FIG. 19 shows measurement result table 900 which represents the relation between dots-in-width and actual measurement values of black bar width and white space width, which includes vertical and horizontal versions (900a and 900b). Here, as associated with the above-mentioned example, the measurement result has been obtained with dots-in-width of 3, 4, 5, 6, 10, 15, and 20. More specifically, it shows that, for example, the black bar of 6 dots-in-width perpendicular to the nozzle array direction exhibits 295 µm in width on paper whereas the white space of the same 6 dots-in-width exhibits 165 µm. Incidentally, the data shown in FIG. 19 should match the result of the graph shown in FIGS. 6A and 6B but, in this example, the compatibility between them is not maintained for convenience.

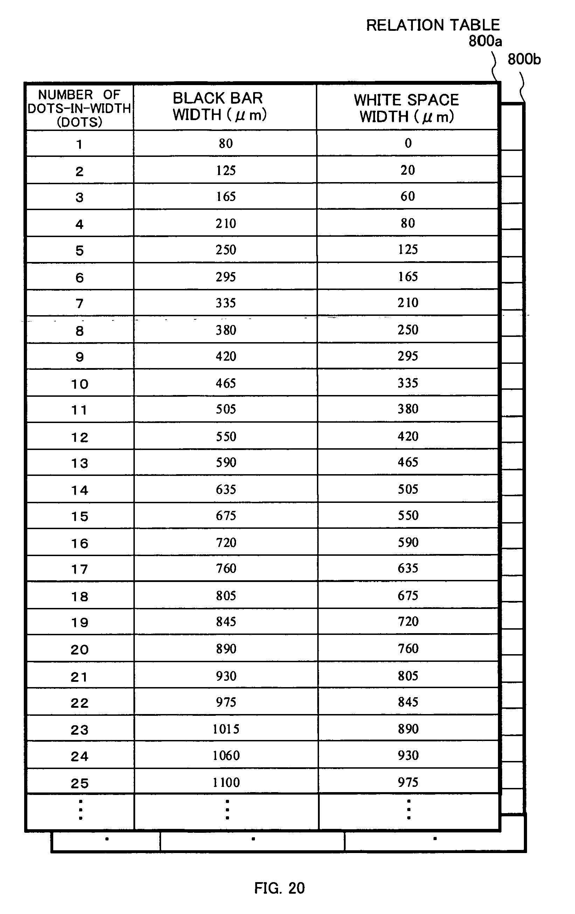

FIG. 20 is a diagram showing another example of the relation table 800 created from the reading of the test chart to show the relation among the number of dots-in-width, a black bar width, and a white space width from 1 dot to 25 dots or more at interval of 1 dot. Here, tables 800a and 800b are shown which are for barcodes with the vertical bars (and spaces) and horizontal bars (and spaces) with respect to the nozzle array. In this instance shown, only the bar (or space) widths for 3, 4, 5, 6, 10, 15 , and 20 dots-in-width are actually measured values and others are estimated values by interpolating the actually measured data.

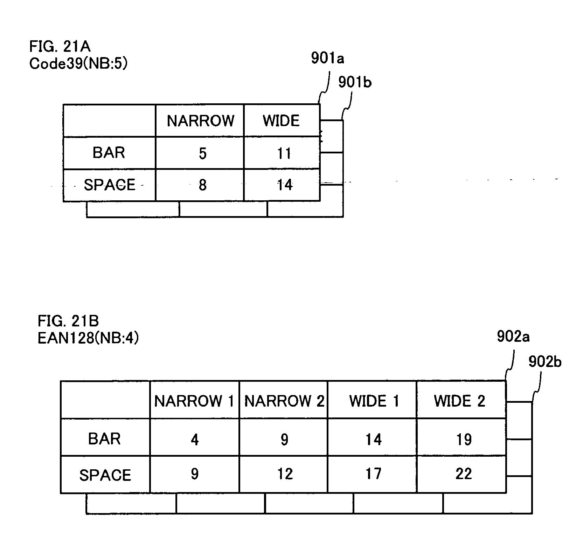

FIGS. 21A and 21B show correction value tables 901a, 901b ("vertical" and "horizontal") and 902a, 902b("vertical" and "horizontal") that are examples of the barcode correction values shown in FIG. 20 for different types of barcode. Besides this, the configuration is as explained above with the tables shown in FIGS. 9A and 9B .

The number of the bar widths of a barcode need not be seven, but at least two is sufficient. Each dot of dot array 603p is formed by a single ink droplet (black dot) . The dot array 603p is used for confirmation of the size of a dot, although this is not related to the operation of this embodiment.

It should be noted that a barcode generation program for causing a computer to execute the functions described in the embodiments described above and a computer readable recording medium for supplying the program are also included in the invention described in this application. The program may be included in an operating system or a printer driver or provided as a standalone application. The recording medium for supplying the program is, for example, a magnetic storage medium (flexible disk, hard disk, magnetic tape, etc.), an optical disc (optical magnetic disc such as MO and PD, CD-ROM, CD-R, CD-RW, DVD-ROM, DVD-RAM, DVD-R, DVD-RW, DVD+RW, etc.), semiconductor storage, a paper tape, etc.

It should be further noted that, though the foregoing description has been made on preferred embodiments of the present invention, the invention is not limited thereto and various changes and modification may be made. For example, though an image scanner is used as the reading device, an optical detector specifically designed to read barcodes, such as a barcode reader or a barcode verifier, may also be used.

Because the unit rectangle size is regarded as the basic minimum size in the case a two-dimensional barcode, the present invention may be applied also to a two-dimensional barcode as to the above example if modified for use with an increase in the dimension. Therefore, the barcode mentioned in the present invention includes a two-dimensional barcode.

Although in the above description, the information processing device 100 has the function to analyze the image of a test chart read by an image scanner and the function to determine barcode correction values, the printing device itself may have those functions.

In addition, the present invention is applicable not only to the dots-in-width size of a barcode but also to the dots-in-width size of a ruled line or a closing line.

Although the printing device has four heads in the example in the above description, it may have one head or multiple heads other than four.

Although the inkjet recording method is used in the example described above, the present invention is applicable to any recording method where the recording size differs according to the usage condition.

## Claims

1. A barcode generation system that generates barcode data for printing a barcode (105), comprising:
a storage unit (112) that stores image data of a test chart (704) for printing black bars (401, 402) and white bars (501, 502) of a barcode, each of the black bars and the white bars having a width of one of a plurality of different numbers of dots;
a measurement unit (111) that measures black bar and white bar widths of the barcode from an image on the test chart (704) printed on a special printing device (200) based on the image data of the test chart; and
a bar width correction unit (111) that calculates a number of dots of each of black bar widths and white bar widths to be set at printing time as barcode correction values based on the measurement result of said measurement unit (111) so that each of printed black bar widths and white bar widths becomes a predetermined width.

2. The system of claim 1 wherein the test chart (704) is printed under the same condition as an actual usage condition.

3. The system of claim 1 wherein said bar width correction unit (111) generates a relation table (800), which associates numbers of dots of printed black bar and white bar widths with actual measurement values of actually printed and measured widths of the black bars (401, 402) and the white bars (501, 502), based on the measurement result of said measurement unit (111).

4. The system of claim 1 wherein the white bar is configured by a space that is not recorded.

5. The system of claim 3 wherein said bar width correction unit (111) comprises an acceptance unit that accepts an input of a barcode type and base-bar width information and, based on the accepted barcode type and base-bar width information, references the relation table (800) and selects numbers of dots of black bar widths and white bar widths to be set at printing time so that the width of each of all black bars and white bars of a printed barcode of the type matches, or becomes close to, a predetermined size.

6. The system of claim 5 wherein said bar width correction unit (111) further comprises
an acceptance unit that accepts an input of a standard character string of a number of characters corresponding to the barcode of the type,
an acceptance unit that accepts an input of a size of the barcode (105) to be generated, and
a selection unit that allows a user to select whether priority is given to storing the generated barcode in an area corresponding to the size regardless of the base-bar width information or priority is given to quality of the generated barcode based on the base-bar width information regardless of whether or not the barcode can be stored in the area and, based on the selection result, said bar width correction unit (111) calculates the barcode correction values.

7. The system of claim 1 wherein said printing device (200) is a printing device employing an inkjet recording method.

8. The system of claim 6, further comprising a generation unit that generates, for a barcode of the accepted type, a bit-mapped image of a barcode to which the entered character string is converted using the calculated barcode correction values and a display unit that displays the generated bit-mapped image.

9. The system of claim 1, wherein
said test chart (704) is a paper sheet on which black bars (401, 402) and white bars (501, 502) of plural dots-in-width, which are not consecutive in the number, are recorded by said printing device (200), and
said bar correction unit (111) estimates, based on the measurement result, widths of printed black bars and white bars of dots-in-width not included in the test chart (704).

10. A computer readable recording medium which stores therein a barcode generation program that generates barcode data for printing a barcode (105), said program causing a computer to execute the steps of:
measuring black bar and white bar widths of a barcode from an image on a test chart (704) printed on a special printing device (200) based on image data of the test chart for printing black bars and white bars of the barcode, each of the black bars (401, 402) and the white bars (501, 502) having a width of one of a plurality of different numbers of dots; and
calculating a number of dots of each of black bar widths and white bar widths to be set at printing time as barcode correction values based on the measurement result so that each of printed black bar widths and white bar widths becomes a predetermined width.

11. A printing device capable of printing a barcode (105), comprising:
a print unit (101) that receives image data of a test chart (704), on which black bars (401, 402) and white bars (501, 502) of a barcode are printed, from an external device (100), each of the black bars and white bars having a predetermined width,
wherein correction values are calculated from actual measurement values of black bar and white bar widths on the test chart (704) printed by said print unit (101) and the barcode is printed based on the correction values.

12. A test chart recorded on a printing medium by an inkjet recording device (200) with a test pattern for correcting widths of black bars and white bars, said test chart (704) comprising a positive area in which black bars (401, 402) of different dots-in-width are arranged, and a negative area (501, 502) in which white bars of different dots-in-width are arranged.

13. The test chart of claim 12, wherein
said positive area includes al least one of a group of plural black bars (402) each extending vertically and another group of plural black bars (401) each extending horizontally, and
said negative area includes at least one of a group of plural white bars (502) each extending vertically and a group of plural white bars (501) each extending horizontally.

14. The test chart of claim 12 wherein said bars of different dots-in-width are consecutive in the number of dots at interval of 1 dot.

15. The test chart of claim 12, wherein said bars of different dots-in-width are not consecutive in the number of dots.
